# EUROPEAN PATENT APPLICATION

(11) **EP 3 153 448 A1**
(43) Date of publication of application: **12.04.2017**
(21) Application number: 15188940.9
(22) Date of filing: 08.10.2015
(51) Int. Cl.: B66B 5/02, H02M 3/158

(54) **ARRANGEMENT AND METHOD FOR CONTROLLING A MACHINERY BRAKE IN AN ELEVATOR**

(71) Applicant: Kone Corporation, 00330 Helsinki (FI)
(72) Inventor: Nakari, Arto, 00330 Helsinki (FI)
(74) Representative: Kolster Oy Ab

(57) **Abstract**

The arrangement comprises a rectifier bridge (RB1) for rectifying an AC grid (200) voltage into a first DC voltage (U1), a DC to DC step-up converter (SU1) connected to the output terminals (P3, P4) of the rectifier bridge (RB1) for converting and stabilizing the first DV voltage (U1) into a second DC voltage (U2), a first capacitor (C1) connected to the output terminals (P5, P6) of the DC to DC step-up converter (SU1), a DC to DC step-down converter (SD1) connected to the output terminals (P5, P6) of the DC to DC step-up converter (SU1) for supplying a third DC voltage (U1) to the electromagnetic machinery brake (100). The arrangement comprises further a battery (E1) being connected by means of a switch element (SE1) to the input terminals (P3, P4) of the DC to DC step-up converter (SU1), whereby the DC to DC step-up converter (SU1) is, in a situation where the AC grid (200) voltage is down, controlled to raise the DC voltage supplied by the battery (E1) to the second DC voltage (U2) to be supplied to the DC to DC step-down converter (SD1) in order to open the machinery brake (100).

## Description

### FIELD OF THE INVENTION

The invention relates to an arrangement for controlling a machinery brake in an elevator according to the preamble of claim 1.

The invention relates also to a method for controlling a machinery brake in an elevator according to the preamble of claim 8.

### BACKGROUND ART

An elevator comprises typically a car, an elevator shaft, a machine room, lifting machinery, ropes, and a counter weight. The elevator car is supported on a sling surrounding the car. The lifting machinery comprises a sheave, a machinery brake and an electric motor for rotating the sheave. The lifting machinery moves the car in a vertical direction upwards and downwards in the vertically extending elevator shaft. The car is carried through the sling by the ropes, which connect the car to the counter weight. The sling of the car is further supported with gliding means at guide rails extending in the vertical direction in the shaft. The gliding means can comprise rolls rolling on the guide rails or gliding shoes gliding on the guide rails when the elevator car is mowing upwards and downwards in the elevator shaft. The guide rails are supported with fastening brackets at the side wall structures of the elevator shaft. The gliding means engaging with the guide rails keep the car in position in the horizontal plane when the car moves upwards and downwards in the elevator shaft. The counter weight is supported in a corresponding way on guide rails supported on the wall structure of the shaft. The car transports people and/or goods between the landings in the building. The elevator shaft can be formed so that the wall structure is formed of solid walls or so that the wall structure is formed of an open steel structure.

Electromechanical drum brakes and disc brakes are typically used as machinery brakes in elevators. The machinery brake stops the rotation of the lifting machinery.

An electromechanical disc brake comprises a rotating disc with brake shoes positioned on opposite sides of the disc. The disc is rigidly connected to the sheave and rotates with the sheave. The brake shoes can be pressed against opposite side surfaces of the disc e.g. by the force of a spring. There are further coils acting in the opposite direction i.e. against the force of the spring. The brake is open when the coils are energized with electricity. The magnetic force of the coil moves the brake shoe against the force of the spring away from the surface of the disc. The spring will immediately move the brake shoes into contact with the side surfaces of the disc when the power is switched off from the coils.

An electromechanical drum brake comprises a rotating drum with brake shoes acting on the inner surface of the drum. The drum is rigidly connected to the sheave and rotates with the sheave. The brake shoes can be pressed against the inner surface of the drum e.g. by the force of a spring. There are further coils that act in the opposite direction i.e. against the force of the spring. The brake is open when the coils are energized with electricity. The magnetic force of the coil moves the brake shoe against the force of the spring away from the inner surface of the drum. The spring will immediately move the brake shoes into contact with the inner surface of the drum when the power is switched off from the coils.

The machinery brake will automatically be connected when the power supply to the coils of the machinery brake is for some reason disrupted. The power supply to the coils can be disrupted on purpose by opening a switch when the intention is to use the machinery brake to stop the elevator car at a desired landing. The power supply to the coils can, however, also be disrupted unintentionally due to a black-out in the power supply to the elevator. The machinery brake will thus be activated automatically stopping the movement of the elevator car when the black-out occurs. This means that people and/or goods can be stuck in the elevator car in a position between the landings.

The releasing of the machinery brake in order to rescue people stuck in the elevator car due to a black-out has in prior art solutions been done mechanically. Prior art solutions comprise a mechanically operable opening mechanism for the machinery brake. The mechanism comprises a first lever connected to the machinery brake for opening the brake and a wire passing from the first lever to a second lever positioned in connection with the remote control unit of the elevator. A remote control unit for the elevator can be positioned on a landing near the lifting machinery of the elevator. The machinery brake can thus be opened by a mechanic who uses the second lever positioned in connection with the remote control unit manually. The elevator car will move either upwards or downwards in a black-out situation when the machinery brake is opened depending on the weight balance of the counter weight and the weight of the elevator car and the load in the elevator car. The mechanic will then see from the remote control unit when the elevator car is at a landing at which point he locks the machinery brake again. People stuck in the elevator car can then leave the elevator car safely when the elevator car has reached a landing and stopped at the landing.

It might be problematic to realize a mechanical machinery brake release arrangement when the distance between the machinery of the elevator and the position of the remote control unit becomes long. The remote control unit is in an elevator provided with a machine room normally positioned in the uppermost floor just below the machine room. The client might want the use the whole uppermost floor e.g. as an apartment. The service person would thus need to be able to enter into the apartment in order to operate the remote control unit. The remote control unit would thus have to be positioned at some lower floor in order to provide free access for the service person. It might be problematic to position the long wire in the shaft and the elongation of the long wire might become a problem.

Dynamic braking has also been used in black-out situations in order to slow down the movement of the elevator car when the machinery brake has been released. The stator windings of the electric motor rotating the sheave are short circuited wholly or partly in dynamic braking in order to slow down the rotation speed of the rotor in the electric motor. The rotating rotor will induce a first magnetic field in the stator windings. This first magnetic field will result in a short circuited current flowing in the short circuited stator windings. The short circuit current will produce a second magnetic field that is opposed to the first magnetic field. This second magnetic field will slow down the rotation of the rotor in the electric motor. The poles can be partly closed by controlling the switches in the frequency converter supplying power to the electric motor in a pulsating way. The dynamic braking is thus achieved electrically with the magnetic field between the stator and the rotor in the electric motor. Dynamic braking can in a blackout situation be activated from the remote control panel when the mechanic opens the machinery brake.

The prior art solutions for controlling the machinery brake in a black-out situation are thus unsatisfactory. There is thus a need for a cheap and reliable system for controlling the machinery brake in a black-out situation in order to rescue people stuck into the elevator car.

### BRIEF DESCRIPTION OF THE INVENTION

An object of the present invention is to present a cheap and reliable arrangement for controlling a machinery brake in an elevator in a black-out situation.

The arrangement for controlling a machinery brake in an elevator according to the invention is characterized by what is stated in the characterizing portion of claim 1.

The arrangement for controlling a machinery brake in an elevator comprises:
a rectifier bridge for rectifying an AC grid voltage into a first DC voltage,
a DC to DC step-up converter being connected to the output terminals of the rectifier bridge for converting and stabilizing the first DV voltage into a second DC voltage,
a first capacitor being connected to the output terminals of the DC to DC step-up converter for smoothing the second DC voltage,
a DC to DC step-down converter being connected to the output terminals of the DC to DC step-up converter for converting the second DC voltage into a third DC voltage to be supplied to the electromagnetic machinery brake.

The arrangement comprises further:
a battery being connected by means of a switch element to the input terminals of the DC to DC step-up converter, whereby the DC to DC step-up converter is, in a situation where the AC grid voltage is down, controlled to raise the DC voltage provided by the battery to the second DC voltage to be supplied to the DC to DC step-down converter in order to open the machinery brake.

The method for controlling a machinery brake in an elevator according to the invention is characterized by what is stated in the characterizing portion of claim 8.

The method for controlling a machinery brake in an elevator, said method comprises the steps of:
rectifying an AC grid voltage into a first DC voltage with a rectifier bridge,
converting and stabilizing the first DV voltage into a second DC voltage with a DC to DC step-up converter being connected to the output terminals of the rectifier bride,
smoothing the second DC voltage with a first capacitor connected to the output terminals of the DC to DC step-up converter,
converting the second DC voltage into a third DC voltage with a DC to DC step-down converter being connected to the output terminals of the DC to DC step-up converter, said third DC voltage being supplied to the electromagnetic machinery brake.

The method comprises the further step of:
controlling the electromagnetic machinery brake in a situation where the AC grid voltage is down by connecting a battery by means of a switch element to the input terminals of the DC to DC step-up converter, whereby the DC to DC step-up converter is controlled to raise the DC voltage supplied by the battery to the second DC voltage to be supplied to the DC to DC step-down converter in order to open the machinery brake.

The invention makes it possible to release the machinery brake and to move the elevator car in a controllable way downwards or upwards to the closest landing in the vicinity of the position where the elevator car stopped during a black-out.

The invention can be used in elevators provided with dynamic braking and in elevators lacking dynamic braking.

The invention can be used in all kind of elevators i.e. in elevators provided with a counterweight, in elevators without a counterweight, in elevators provided with a machine room and in elevators lacking a machine room.

### BRIEF DESCRIPTION OF THE DRAWINGS

The invention will in the following be described in greater detail by means of preferred embodiments with reference to the attached drawings, in which
Figure 1 shows a vertical cross section of an elevator,
Figure 2 shows a block diagram of the main parts in a control system of an elevator,
Figure 3 shows a sheave and a disc type machinery brake of an elevator,
Figure 4 shows a machinery brake control system provided with an arrangement according to the invention.

### DETAILED DESCRIPTION OF EMBODIMENTS OF THE INVENTION

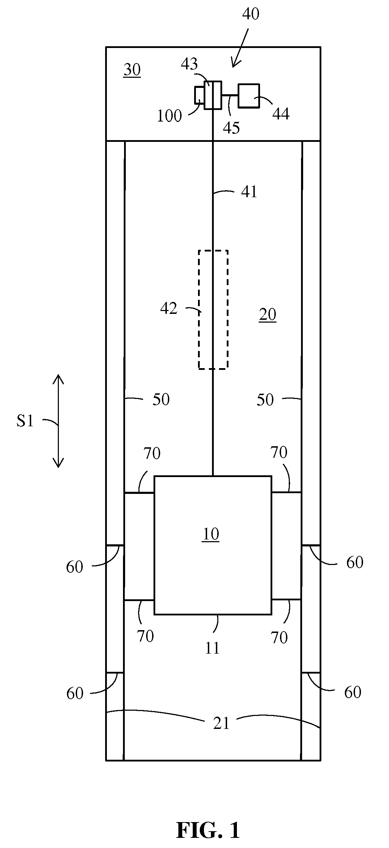

Fig. 1 shows a vertical cross section of an elevator. The elevator comprises a car 10, an elevator shaft 20, a machine room 30, lifting machinery 40, ropes 41, and a counter weight 42. The car 10 is supported on a sling 11 surrounding the car 10. The lifting machinery 40 comprises a sheave 43, a machinery brake 100 and an electric motor 44 for rotating the sheave 43 via a shaft 45. The lifting machinery 40 moves the car 10 in a vertical direction S1 upwards and downwards in the vertically extending elevator shaft 20. The car 10 is carried through the sling 11 by the ropes 41, which connect the car 10 to the counter weight 42. The sling 11 of the car 10 is further supported with gliding means 70 at guide rails 50 extending in the vertical direction in the shaft 20. The figure shows two guide rails 50 at opposite sides of the car 10. The gliding means 70 can comprise rolls rolling on the guide rails 50 or gliding shoes gliding on the guide rails 50 when the car 10 is mowing upwards and downwards in the elevator shaft 20. The guide rails 50 are supported with fish plates attached to fastening brackets 60 which are attached to the side wall structures 21 in the elevator shaft 20. The figure shows only two fastening brackets 60, but there are several fastening brackets 60 along the height of each guide rail 50. The gliding means 70 engaging with the guide rails 50 keep the car 10 in position in the horizontal plane when the car 10 moves upwards and downwards in the elevator shaft 20. The counter weight 42 is supported in a corresponding way on guide rails supported on the wall structure 21 of the shaft 20. The car 10 transports people and/or goods between the landings in the building. The elevator shaft 20 can be formed so that the wall structure 21 is formed of solid walls or so that the wall structure 21 is formed of an open steel structure.

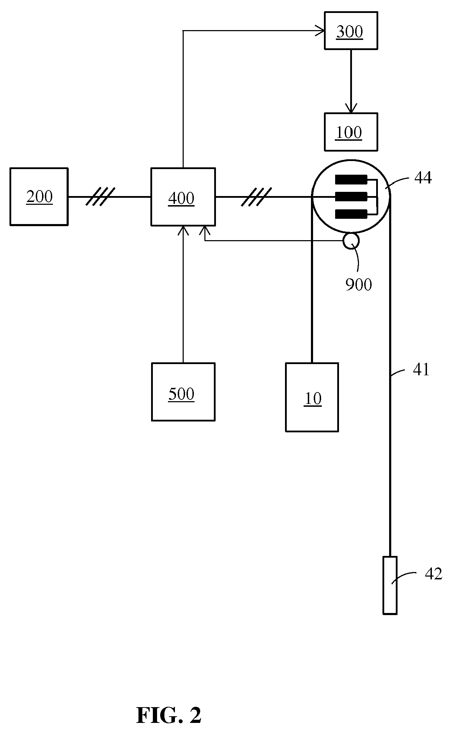

Figure 2 shows a block diagram of the main parts in a control system of an elevator. The elevator car 10 is carried by the ropes 41, which connect the car 10 to the counter weight 42. The ropes 41 pass over the sheave 43 shown in figure 1. The sheave 43 is driven by the electric motor 44. The system comprises a machinery brake 100, a machinery brake control unit 300, a frequency converter 400, and a main control unit 500.

The frequency converter 400 is connected to the electrical grid 200. The electric motor 44 is advantageously a permanent magnet synchronous motor 44. The frequency converter 400 controls the rotation of the electric motor 44. The rotation speed of the electric motor 44 is measured with an encoder 900, which is connected to the frequency converter 400. The frequency converter 400 also receives a rotational speed reference of the electric motor 44 from the main control unit 500. The rotational reference speed data of the electric motor 44 is the target value of the rotational speed of the electric motor 44.

The machinery brake control unit 300 is used to control the machinery brake 100 of the elevator. The machinery brake control unit 300 can e.g. be situated in connection with the control panel of the elevator or in connection with the main control unit 500 or in the vicinity of the machinery brake 100 or in connection with the electric motor 44.

The elevator can also be provided with dynamic braking. The rotation of the rotor of the electric motor 44 in a black-out situation induces a magnetic field in the stator windings of the electric motor 44. The induced magnetic field in the stator windings of the electric motor creates a current that flows in the short-circuited stator windings. This short circuit current creates a second magnetic field in the stator windings that is opposed to the first magnetic field. This second magnetic field will slow down the rotation of the rotor. Dynamic braking can thus be achieved by short circuiting the stator windings of the electric motor 44. Dynamic braking is an advantage in the inventive arrangement, but dynamic braking is not a necessary prerequisite for the inventive arrangement.

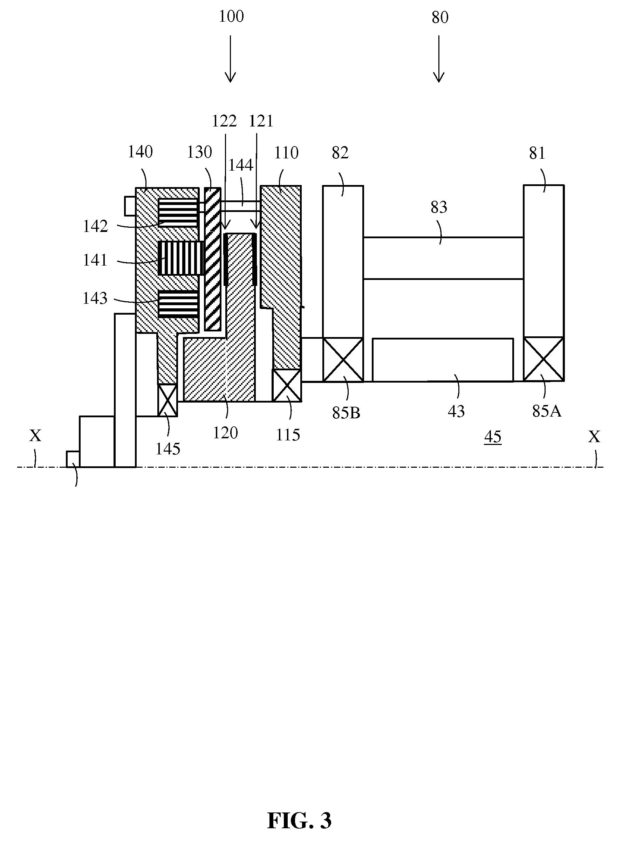

Figure 3 shows a sheave and a disc type machinery brake of an elevator. The inventive arrangement can be used with a disc type machinery brake or a drum type machinery brake or any other electromechanical machinery brake that can be used in an elevator.

The electromechanical disc brake 100 stops the rotation of the sheave 43 and thus also the rotation of the rotor of the electric motor 44. The figure shows only the upper part of the sheave 43 and the machinery brake 100 above the axial centre axis X-X of rotation. The construction is symmetrical in view of the axial centre axis X-X of rotation.

The sheave 43 is mounted within a stationary frame 80 comprising a first frame part 81 and a second frame part 82 at an axial X-X distance from the first frame part 81. The first frame part 81 and the second frame part 82 are connected by an intermediate frame part 83 extending in the axial X-X direction between the first frame part 81 and the second frame part 82. The first frame part 81 is supported on the shaft 45 with a first bearing 85A. The second frame part 82 is supported at the shaft 45 with a second bearing 85B. The sheave 43 is fixedly attached to the shaft 45 and rotates with the shaft 45.

The machinery brake 100 comprises a stationary frame flange 110 supported on the shaft 45 with a third bearing 115 and a stationary magnet part 140 supported on the shaft 45 with a fourth bearing 145. The machinery brake 100 comprises further a brake disc 120 positioned between the frame flange 110 and the magnet part 140. The brake disc 120 is fixedly attached to the shaft 45 and rotates with the shaft 45. The machinery brake 100 comprises further a stationary armature plate 130 positioned between the brake disc 120 and the magnet part 140. The armature plate 130 is supported with support bars 144 passing through holes in the armature plate 130. The armature plate 130 can move in the axial direction X-X but it is stationary in the rotational direction. There are two coils 142, 143 and a spring 141 within the magnet part 140. The spring 141 presses the armature plate 130 against the brake disc 120. When the coils 142, 143 are activated by an electric current they produce a magnetic force, which draws the armature plate 130 in the axial direction X-X against the force of the spring 141 to the magnet part 140. The brake disc 120 is free to rotate with the shaft 45 when electric current is lead to the coils 142, 143. The spring 141 presses the armature plate 120 against the brake disc 120 when the electric current to the coils 142, 142 is disconnected. The pressure of the spring 141 causes the vertical opposite outer surfaces 121, 122 of the brake disc 120 to be pressed between the stationary armature plate 130 and the stationary frame flange 110. This will stop the rotational movement of the brake disc 120 and thereby also the rotational movement of the shaft 45 and the sheave 43. The elevator car 10 will thus be stopped.

The machinery brake 100 will automatically brake when the power supply to the coils 142, 143 is for some reason disrupted. The power supply to the coils 142, 143 can be disrupted on purpose by opening a switch in the third control unit 300 when the intention is to use the machinery brake 100 to stop the elevator car 10 at a desired landing. The power supply to the coils 142, 143 can, however, also be disrupted unintentionally due to a black-out in the power supply to the elevator. The machinery brake 100 will immediately start braking the rotation of the sheave 43 and thereby the movement of the elevator car 10 when black-out occurs. This means that people and/or goods can be stuck in the elevator car 10 in a position between the landings. There is thus a need to be able to release the machinery brake 100 when the people stuck in the elevator car 10 are to be rescued to a landing.

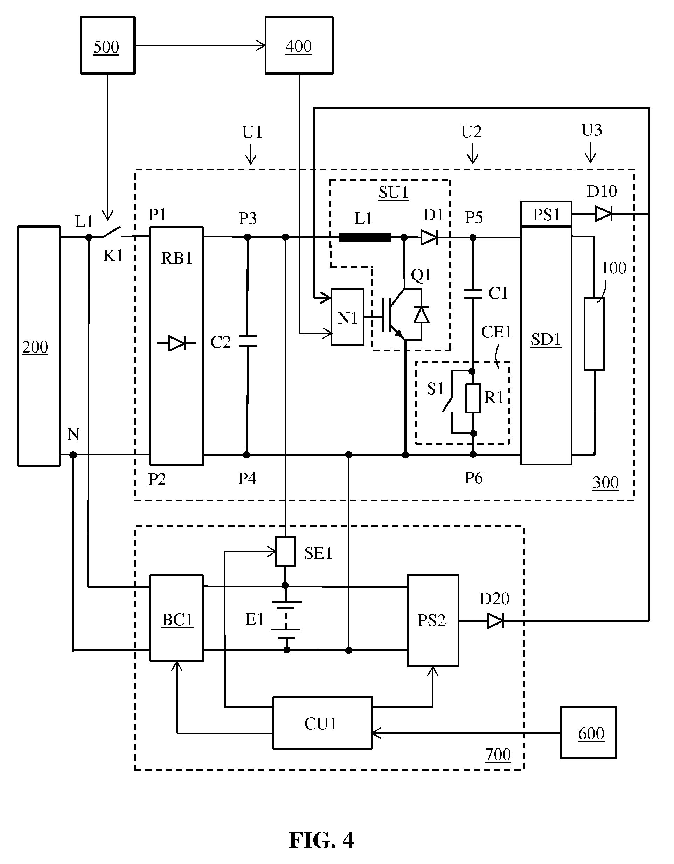

Figure 4 shows a machinery brake control system provided with an arrangement according to the invention. The part within the rectangle 300 drawn with a dotted line corresponds to the machinery brake control unit 300 shown in figure 2. This represents a normal brake control system used in elevators. The part within the smaller rectangle 700 drawn with a dotted line is a battery operations control unit. The frequency converter 400, the main control unit 500 and the remote control unit 600 are also shown in the figure.

AC electric power is provided from the grid 200 to the input terminals P1, P2 of a rectifier bride RB1. The rectifier bridge RB1 converts the AC grid 200 voltage at the input terminals P1, P2 of the rectifier bridge RB1 into a first direct voltage U1 at the output terminals P3, P4 of the rectifier bridge RB1. The second capacitor C2 connected to the output terminals P3, P4 of the rectifier bridge RB1 is not necessarily needed in the circuit. The function of the second capacitor C2 is to lessen the variation in (or smooth) the rectified direct voltage provided by the rectifier bridge RB1. The first direct voltage U1 acting over the second capacitor C2 is then connected to the input terminals P3, P4 of a DC to DC step-up converter SU1 for converting and stabilizing the first direct voltage U1 into a second direct voltage U2 over a first capacitor C1. The DC to DC step-up converter SU1 produces in the output terminals P5, P6 a second DC voltage U2 which is higher than the first DC voltage U1. The function of the first capacitor C1 is to lessen the variation in (or smooth) the direct voltage provided by the DC to DC step-up converter SU1. The second direct voltage U2 is connected to the input terminals P5, P6 of a DC to DC step-down converter SD1. The DC to DC step-down converter SD1 converts the second direct voltage U2 into a third direct voltage U3 which is supplied to the machinery brake 100.

The DC to DC step-up converter SU1 comprises a series connection of an inductor L1 and a diode D1 and a controllable switch Q1 connected in parallel between the inductor L1 and the diode D1. The DC to DC step-up converter SU1 is controlled by a control circuit N1 connected to the base of the transistor Q1.

There is a first auxiliary power supply unit PS1 in the DC to DC step-down converter SD1 supplying current via a diode D10 to the control unit N1 of the DC to DC step-up converter SU1.

There is further a first switch K1 in the main voltage line L1 before the input terminals P1, P2 of the rectifier bride RB1. This is a part of the safety circuit of the elevator. The main control unit 500 will close the first switch K1 when the main control unit 500 receives a control signal to move the elevator car 10 and all the prerequisites relating to safety issues are fulfilled.

There is further a charging element CE1 connected in series with the first capacitor C1. Before the brake is opened, when the first switch K1 is closed, the first capacitor C1 has to be charged into the peak value of the supply voltage. This is achieved with the charging element CE1. The charging element CE1 can comprise a first resistor R1 connected in parallel with a first switch S1. The first switch S1 is closed when the first capacitor C1 has been charged close to the peak value over the first resistor R1. A fuse (not shown in the figure) could be connected in series with the first resistor R1 if there is a need to protect the first resistor R1 in a fault situation.

The battery operations control unit 700 is advantageously located close to the machinery brake control unit 300 or it could be integrated to the machinery brake control unit 300. The battery operations control unit 700 comprises an AC to DC battery charger BC1 connected to the grid 200 and charging the battery E1 with DC current when there is power in the grid 200. There is further a battery control unit CU1 controlling the battery operated opening of the machinery brake 100. This battery control unit CU1 can be enabled with a control signal from the remote control unit 600. There is further a second auxiliary power supply unit PS2 supplying power through a diode D20 to the control block N1 controlling the DC to DC step-up converter SU1 positioned inside the machinery brake control unit 300. There is further an interface to the remote control unit 600, which remote control unit 600 is located at a landing control panel or in the machine room 30. There is further a switch element SE1 connecting the battery E1 to the input terminals P3, P4 of the DC to DC step-up converter SU1. The switch element SE1 is controlled by the battery control unit CU1. The switch element SE1 can comprise a series connection of a switch and a diode.

Electric power will be provided from the battery E1 to the input terminals P3, P4 of the DC to DC step-up converter SU1 when the battery control unit CU1 is activated from the remote control unit 600. The battery control unit CU1 will then activate the switch element SE1 in order to connect the battery E1 to the input terminals P3, P4 of the DC to DC step-up converter SU1. The DC to DC step-up converter SU1 raises the DC voltage provided by the battery E1 and provides a suitable voltage to the input terminals P5, P6 of the DC to DC step-down converter SD1.

The arrangement according to the invention can be used after a black-out occurs to move the elevator car 10 safely to the first landing below or above the position where the elevator car 10 stopped at the black-out. The switch element SE1 can be activated by the battery control unit CU1 through the remote control unit 600. The DC voltage provided by the battery E1 is thus provided to the input terminals P3, P4 of the DC to DC step-up converter SU1. The DC to DC step-up converter SU1 is then controlled by the frequency converter 400 to raise the DC voltage of the battery E1 to the level of the second direct voltage U2 to be supplied to the input terminals P5, P6 of the DC to DC step-down converter SD1. The DC to DC step-down converter SD1 supplies the third DC voltage U3 to the machinery brake 100, which means that the machinery brake 100 is opened. The elevator car 10 will then start descending or ascending after which the frequency converter 400 activates the dynamic braking in order to control the descending or ascending speed of the elevator car 10. The operator can follow the position of the elevator car 10 as it descends in the shaft 20 from the position signal on the remote control unit 600. The operator can then stop the elevator car 10 when it reaches the closest landing and open the elevator car 10 door. The shaft door is opened from the landing after which the people within the elevator car 10 are able to step to the landing.

The DC to DC step-up converter SU1 is needed in a normal operation situation in order to raise the voltage received at the output of the rectifier bridge RB1 to a value that is higher than the peak value of the supply voltage. This is needed in order to be able to secure the proper function of the machinery brake 100 also in a situation where the supply voltage is below the normal value. The DC to DC step-up converter SU1 makes it also possible to load the supply voltage evenly as the waveform of the current follows the waveform of the supply voltage due to the used step-up topology and the regulator. This means that a correction of the power factor is achieved. It is thus possible to supply current to the first capacitor C1 during almost the whole net cycle, which means that the output voltage does not drop between the peak values of the AC supply voltage. This would happen if the voltage to the first capacitor C1 would be supplied directly by the rectifier bridge RB1. The other possibility would be to use a first capacitor C1 having a big enough capacitance to avoid the voltage drop between the peak values of the supply voltage when current when current is fed to the electromechanical machinery brake 100. The machinery brake 100 needs a voltage that is almost 250 V, which will not be achieved without a DC to DC step-up converter or without using a great number of capacitors forming the first capacitor C1. The disadvantage with a capacitor having a big capacitance is the long charging time and a poor power factor, which means that the loading of the power supply is uneven.

The first DC voltage U1 is at the most 325 V when the AC supply voltage is at the nominal value. The first DC voltage U1 is raised with the DC to DC step-up converter SU1 to a level of about 380 to 400 V. The waveform of the first DC voltage U1 is at the same time shaped to be more uniform. The control circuit N1 of the DC to DC step-up converter SU1 produces the output voltage of about 400 V regardless of the power supply i.e. the grid or the battery E1. The DC to DC step-up converter SU1 can be controlled in the same way or in a different when supplied from the grid or from the battery E1.

The principal control of the elevator car during a black out when the car has been stuck in between two adjacent landings is explained in the following. The operator initiates the operation from the remote control unit 600, which sends a control signal to the control unit CU1 within the battery control unit 700. The switch element SE1 connects the battery E1 to the DC to DC step-up converter SU1. The first capacitor C1 is charged through the first resistor R1 or some other current restricting element almost to the voltage of the battery E1. The auxiliary power needed in the control circuit N1 of the machinery brake control unit 300 is provided by the second auxiliary power supply unit PS2. The DC to DC step-up converter SU1 is activated by sending an enabling signal to the control circuit N1, which means that the second voltage U2 will reach the higher voltage e.g. 400 V. The DC to DC step-down converter SD1 is activated, which means that current is fed to the machinery brake 100 causing the machinery brake 100 to open. The elevator car 10 moves downwards or upwards in the shaft 20 when the machinery brake is open. The elevator may be equipped with a separate dynamic brake, which slows down the movement of the elevator car 10 when the machinery brake 100 is open. The control equipment for the control system i.e. the user interface is located in an appropriate position in connection with the elevator. The user interface is provided with battery driven activation equipment and battery driven indication equipment. The indication equipment shows the direction of movement, the speed, as well as the position of the elevator car 10 in the shaft 20. When the indication equipment show that the elevator car 100 arrives at a landing the opening function of the machinery brake is switched off, which means that the machinery brake 100 closes and the elevator car 10 stops at the landing. The doors of the elevator car 10 as well as the doors of the shaft can then be opened from the landing at which the elevator car 10 stopped. The people stuck into the elevator car 10 can then step out of the elevator car 10 to the landing. The elevator can then be released to normal operation when the black-out is over.

The use of the invention is naturally not limited to the type of elevator disclosed in figure 1, but the invention can be used in any type of elevator e.g. also in elevators lacking a machine room and/or a counterweight.

The invention can naturally also be applied in elevators where there is no dynamic braking.

It will be obvious to a person skilled in the art that, as the technology advances, the inventive concept can be implemented in various ways. The invention and its embodiments are not limited to the examples described above but may vary within the scope of the claims.

## Claims

1. Arrangement for controlling a machinery brake in an elevator comprising:
a rectifier bridge (RB1) for rectifying an AC grid (200) voltage into a first DC voltage (U1),
a DC to DC step-up converter (SU1) being connected to the output terminals (P3, P4) of the rectifier bridge (RB1) for converting and stabilizing the first DV voltage (U1) into a second DC voltage (U2),
a first capacitor (C1) being connected to the output terminals (P5, P6) of the DC to DC step-up converter (SU1) for smoothing the second DC voltage (U2),
a DC to DC step-down converter (SD1) being connected to the output terminals (P5, P6) of the DC to DC step-up converter (SU1) for converting the second DC voltage (U2) into a third DC voltage (U3) to be supplied to the electromagnetic machinery brake (100),
**characterized in that** the arrangement further comprises:
a battery (E1) being connected by means of a switch element (SE1) to the input terminals (P3, P4) of the DC to DC step-up converter (SU1), whereby the DC to DC step-up converter (SU1) is, in a situation where the AC grid (200) voltage is down, controlled to raise the DC voltage provided by the battery (E1) to the second DC voltage (U2) to be supplied to the DC to DC step-down converter (SD1) in order to open the machinery brake (100).

2. Arrangement according to claim 1, **characterized in that** a second capacitor (C2) is connected to the output terminals (P3, P4) of the rectifier bridge (RB1) for smoothing the first DC voltage (U1) provided by the rectifier bridge (RB1).

3. Arrangement according to claim 1 or 2, **characterized in that** a charging element (CE1) is connected in series with the first capacitor (C1), said series connection of the charging element (CE1) and the first capacitor (C1) being connected to the output terminals (P5, P6) of the DC to DC step-up converter (SU1).

4. Arrangement according to any one of claims 1 to 3, **characterized in that** the a first auxiliary power supply unit (PS1) is provided within the DC to DC step-down converter (SD1), said first auxiliary power supply unit (PS1) being connected through a diode (D10) to the control unit (N1) of the DC to DC step-up converter (SU1) in order to supply current to the control unit (N1) of the DC to DC step-up converter (SU1) during normal operation of the machinery brake (100).

5. Arrangement according to any one of claims 1 to 4, **characterized in that** a battery operations control unit (700) is provided for controlling the connection of the battery (E1) to the input terminals (P3, P4) of the DC to DC step-up converter (SU1).

6. Arrangement according to claim 5, **characterized in that** the battery operations control unit (700) comprises a control unit (CU1), the switch element (SE1), a battery charger (BC1) and a second auxiliary power supply unit (PS2), whereby the control unit (CU1) controls the switch element (SE1) the battery charger (BC1) and the second auxiliary power supply unit (PS2).

7. Arrangement according to claim 6, **characterized in that** the second auxiliary power supply unit (PS2) is connected through a diode (D20) to the control circuit (N1) of the DC to DC step-up converter (SU1) in order to supply current to the control circuit (N1) of the DC to DC step-up converter (SU1) in a black-out situation when the machinery brake (100) is to be controlled.

8. A method for controlling a machinery brake in an elevator, said method comprising the steps of:
rectifying an AC grid (200) voltage into a first DC voltage (U1) with a rectifier bridge (RB1),
converting and stabilizing the first DV voltage (U1) into a second DC voltage (U2) with a DC to DC step-up converter (SU1) being connected to the output terminals (P3, P4) of the rectifier bride (RB1),
smoothing the second DC voltage with a first capacitor (C1) connected to the output terminals (P5, P6) of the DC to DC step-up converter (SU1),
converting the second DC voltage (U2) into a third DC voltage (U3) with a DC to DC step-down converter (SD1) being connected to the output terminals (P5, P6) of the DC to DC step-up converter (SU1), said third DC voltage (U3) being supplied to the electromagnetic machinery brake (100),
**characterized in that** the method further comprises the step of:
controlling the electromagnetic machinery brake (100) in a situation where the AC grid voltage is down by connecting a battery (E1) by means of a switch element (SE1) to the input terminals (P3, P4) of the DC to DC step-up converter (SU1), whereby the DC to DC step-up converter (SU1) is controlled to raise the DC voltage supplied by the battery (E1) to the second DC voltage (U2) to be supplied to the DC to DC step-down converter (SD1) in order to open the machinery brake.

9. A method according to claim 8, **characterised in that** the method comprises the further step of smoothing the first DC voltage with a second capacitor (C2) connected to the output terminals (P3, P4) of the rectifier bridge (RB1).
